# EUROPÄISCHE PATENTSCHRIFT

(11) **EP 0 926 389 B1**
(45) Veröffentlichungstag und Bekanntmachung des Hinweises auf die Patenterteilung: **25.05.2005**
(21) Anmeldenummer: 98122606.1
(22) Anmeldetag: 27.11.1998
(51) Int. Cl.: F16F 15/134

(54) **Torsionsschwingungsdämpfer**
Rotational vibration damper
Amortisseur de vibrations torsionelles

(30) Priorität: 23.12.1997 DE 19757556; 23.12.1997 DE 19757562; 28.02.1998 DE 19808561
(43) Veröffentlichungstag der Anmeldung: 30.06.1999
(73) Patentinhaber: Rohs - Voigt Patentverwertungsgesellschaft mbH, 52351 Düren (DE)
(72) Erfinder: Rohs, Ulrich Dr.-Ing., 52351 Düren (DE); Rohs, Hans, 52351 Düren (DE); Heidingsfeld, Dietmar, Dipl.-Ing., 52078 Aachen (DE)
(74) Vertreter: Castell, Klaus, Dr.

(56) Entgegenhaltungen:
- WO-A-99/22158
- BE-A- 378 790
- DE-A- 3 815 505
- DE-A- 4 341 374
- DE-A- 19 544 832
- DE-A- 19 700 851
- DE-U- 9 017 936
- US-A- 4 884 996

## Beschreibung

Die Erfindung betrifft einen Torsionsschwingungsdämpfer, insbesondere für Kupplungen mit zwei gegeneinander drehbeweglichen Baugruppen, die über eine wenigstens einen Schubkolben umfassende Federanordnung miteinander wirkverbunden sind.

Ein derartiger Torsionsschwingungsdämpfer ist z. B. aus der DE 195 44 832 A1 bekannt. Dieser besteht aus einer Antriebsscheibe, welche eine Abtriebsscheibe teilweise übergreift und an der Innenseite des übergreifenden Teiles über den Umfang verteilte, radiale Taschen aufweist, sowie in den Taschen angeordnete Schubkolben, die gegeneinander durch mindestens eine Druckfeder auseinander gehalten sind. Die Mantelfläche der Abtriebsscheibe ist im Querschnitt polygonal und steht mit den Schubkolben in Kontakt. Insofern dient diese Mantelfläche als Kontaktfläche über welche die Abtriebsscheibe derart mit der aus Schubkolben und Druckfedern gebildeten Federanordnung wechselwirkt, daß bei einer Verdrehung von Antriebs- und Abtriebsscheibe die Druckfedern komprimiert werden.

Das Dokument DE-A-19 700 851 zeigt die Merkmale des Oberbegriffs von Anspruch 1.

Dieser Torsionsschwingungsdämpfer findet insbesondere für Kupplungen Anwendung, wobei die Abtriebsscheibe mittelbar oder unmittelbar mit einer der Reibflächen verbunden ist.

Es ist Aufgabe vorliegender Erfindung, eine baulich einfache Wärmeisolation vorzusehen.

Als Lösung wird vorgeschlagen ein Torsionsschwingungsdämpfer nach Anspruch 1.

Durch den Materialübergang von zweiter Baugruppe und separater Baugruppe, welcher schon für sich genommen eine isolierende Wirkung hat, kann auf baulich einfache Weise eine Wärmeisolation zwischen der zweiten Baugruppe und der Federanordnung, insbesondere der Schubkolben und zwischen diesen angeordneten Federn, erreicht werden. Dieses ist insbesondere von Vorteil, wenn die zweiter Baugruppe mit einer Reibfläche einer Kupplung verbunden ist, bzw. eine solche Reibfläche aufweist.

Die Anordnung ermöglicht es insbesondere, auch Schubkolben aus geeignetem Material, wie aus Kunststoff, zu verwenden, wobei diese Materialien für ihre Aufgabe, eine Keilwirkung und eine Reibwirkung zu erzielen, speziell geeignet gewählt sind, ohne daß diese übergroße thermische Belastungen aushalten müßten.

Die Wärmeisolation läßt sich weiter verbessern, wenn die separate Baugruppe nur partiell mit der zweiten Baugruppe in Kontakt steht. Auf diese Weise wird die wärmeübertragende Gesamtfläche zwischen separater Baugruppe und zweiter Baugruppe reduziert und somit der Wärmewiderstand zwischen diesen beiden Baugruppen erhöht. Entsprechend den bestehenden Anforderungen an Wärmeisolation und Stabilität dieser Anordnung kann die separate Baugruppe in axialer Richtung, d. h. parallel zur Rotationsachse des Torsionsschwingungsdämpfers und/oder in Umfangsrichtung partiell mit der zweiten Baugruppe in Kontakt stehen.

Die erfindungsgemäße Anordnung aus separater Baugruppe und zweiter Baugruppe kann baulich einfach und dennoch stabil ausgestaltet werden, wenn die separate Baugruppe mindestens ein plattenförmiges Element umfaßt, das auf einer entsprechenden Stützfläche der zweiten Baugruppe ruht.

Durch eine Ausgestaltung der separaten Baugruppe als Kontaktring läßt sich die Stabilität der separaten Baugruppe und somit die Stabilität der gesamten Anordnung weiter erhöhen. In dieser Hinsicht ist es auch vorteilhaft, wenn die zweite Baugruppe eine Stützfläche aufweist, welche die separate Baugruppe, insbesondere wenn diese ringförmig ausgebildet ist, radial abstützt. Auf diese Weise können Kräfte in radialer Richtung zwischen Federanordnung und zweiter Baugruppe übertragen werden, so daß bei dem erfindungsgemäßen Torsionsschwingungsdämpfer unnötig hohe Axialkräfte vermieden werden.

Dadurch, daß die Stützfläche der zweiten Baugruppe in axialer Richtung kleiner als der Kontaktring ausgestaltet wird, kann in baulich einfacher Weise ein in axialer Richtung partieller Kontakt zwischen separater Baugruppe und zweiter Baugruppe realisiert werden. Andererseits kann die zweite Baugruppe umfangsverteilt voneinander beabstandete Vorsprünge aufweisen, auf welchen der Kontaktring abgestützt ist. Hierdurch wird ein in Umfangsrichtung partieller Kontakt zwischen zweiter Baugruppe und separater Baugruppe realisiert. Es versteht sich, daß die vorgenannten Ausgestaltungen auch in Kombination vorteilhaft zur Anwendung kommen können. Liegt die separate Baugruppe lediglich auf der zweiten Baugruppe auf, so wird durch diese Maßnahme der Wärmewiderstand zwischen zweiter Baugruppe und separater Baugruppe hoch gehalten. Ebenso ist es möglich, die separate Baugruppe lediglich punktuell mit der zweiten Baugruppe zu verbinden, so daß nur an diesen Punkten die beiden Baugruppen in innigem Kontakt stehen. Auf eine innige Verbindung dieser beiden Baugruppen, und somit einen guten Wärmeübergang zwischen denselben, kann verzichtet werden, wenn separate Baugruppe und zweite Baugruppe so ausgeformt sind, daß sie durch einen in Umfangsrichtung wirksamen Formschluß miteinander verbunden sind.

Es versteht sich, daß durch weitere konstruktive Maßnahmen, wie z. B. Ausnehmungen in der separaten Baugruppe, der Wärmewiderstand der separaten Baugruppe bzw. zwischen zweiter Baugruppe und separater Baugruppe weiter erhöht werden kann.

Um auch bei nur partieller Abstützung der separaten Baugruppe an der zweiten Baugruppe eine ausreichende Stabilität der separaten Baugruppe zu gewährleisten, kann diese metallisch ausgebildet sein. Hierzu kann insbesondere auch ein weniger gut wärmeleitendes Metall, wie z. B. Edelstahl Verwendung finden.

Weitere Vorteile, Ziele und Eigenschaften vorliegender Erfindung folgen aus nachfolgender Beschreibung anliegender Zeichnung, in welcher beispielhaft drei Ausführungsformen eines erfindungsgemäßen Torsionsschwingungsdämpfers dargestellt sind.

In der Zeichnung zeigen:
- Figur 1: eine erste Ausführungsform eines erfindungsgemäßen Torsionsschwingungsdämpfers im Schnitt, wobei die obere Hälfte entlang der Linie I - I und die untere Hälfte entlang der Linie I' - I' geschnitten sind;
- Figur 2: einen Schnitt durch den Torsionsschwingungsdämpfer nach Figur 1 entlang der Linien A - A bzw. B - B in Figur 1;
- Figur 3: eine zweite Ausführungsform eines erfindungsgemäßen Torsionsschwingungsdämpfers geschnitten entlang der Linien A - A bzw. B - B in Figur 4;
- Figur 4: einen Schnitt durch den Torsionsschwingungsdämpfer nach Figur 3 entlang der Linie IV - IV;
- Figur 5: eine dritte Ausführungsform eines erfindungsgemäßen Torsionsschwingungsdämpfers in ähnlicher Darstellung wie Figur 1;
- Figur 6: einen Schnitt durch den Torsionsschwingungsdämpfer nach Figur 5 entlang der Linie A - A in Figur 5;
- Figur 7: einen Schnitt durch den Torsionsschwingungsdämpfer nach Figur 5 entlang der Linie B - B in Figur 5 und
- Figur 8: einen Schnitt durch den Torsionsschwingungsdämpfer nach Figur 5 entlang der Linie C - C in Figur 5.

Die dargestellten Ausführungsformen weisen jeweils eine erste Baugruppe 1 auf, in welcher eine zweite Baugruppe 2 mittels eines Lagers 10 gelagert ist. Die zweite Baugruppe 2 weist an ihrer der ersten Baugruppe 1 abgewandten Seite eine Reibfläche 21 auf, die Bestandteil einer Schaltkupplung ist. Erste Baugruppe 1 und zweite Baugruppe 2 sind durch eine Federanordnung 7 miteinander verbunden. Die Federanordnung 7 umfaßt umfangsverteilt tangential wirksame Federn 70 durch welche jeweils zwei Keile 71 auseinander gehalten werden. Die jeweiligen Keile 71 mit den dazugehörigen Federn 70 sind jeweils in Taschen 11 der ersten Baugruppe 1 angeordnet.

Zwischen erster Baugruppe 1 und zweiter Baugruppe 2 ist als separate Baugruppe ein Kontaktring 3 vorgesehen, der eine polygonale Form aufweist. Die äußere Umfangsfläche des Kontaktringes 3 dient als Kontaktfläche 4, über welche die separate Baugruppe bzw. der Kontaktring 3 sowie die zweite Baugruppe 2 mit der Federanordnung 7 wechselwirkt. Bei den dargestellten Ausführungsformen erfolgt eine Schwingungsdämpfung unter anderem derart, daß durch ein Verdrehen der zweiten Baugruppe 2 und somit der Kontaktfläche 4 gegenüber der ersten Baugruppe 1 zu einer Kompression der Federn 70 und einer Reibung der Keile 71 führt.

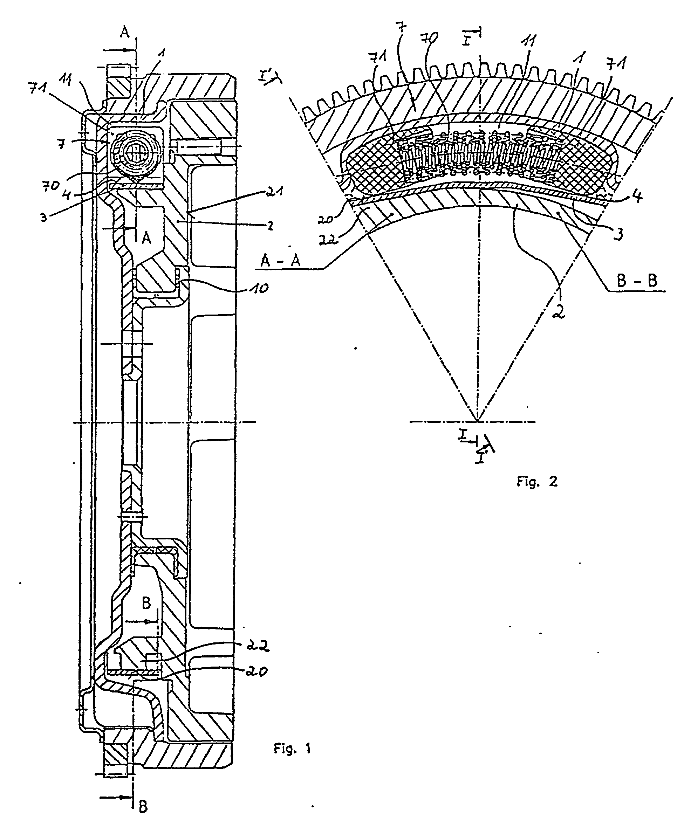

Bei der ersten Ausführungsform (siehe Figuren 1 und 2) ist die separate Baugruppe, nämlich der Kontaktring 3, durch einen Vorsprung 22 der zweiten Baugruppe 2 abgestützt. Dieser Vorsprung 22 ist in axialer Richtung kleiner als der Kontaktring 3, so daß die separate Baugruppe in axialer Richtung nur partiell mit der zweiten Baugruppe in Kontakt steht. Die radiale Dicke des Vorsprungs 22 variiert über den Umfang und zwar dergestalt, daß der Vorsprung 22 auf Höhe der Keile 71 am höchsten und in der Mitte der Federn am niedrigsten ist. Eine derartige Ausgestaltung ist ohne nennenswerte Erniedrigung des Wärmewiderstandes möglich, da der Kontaktring auf Höhe der Federn 70 ohnehin nicht mit den Keilen 71 in Berührung kommt und somit an diesen Stellen kein nennenswerter Wärmetransport stattfindet. Die Stützfläche 20 stützt den Kontaktring 3 in radialer Richtung ab und ist in ihrer Form der polygonalen Form des Kontaktringes 3 angepaßt. Auf diese Weise ist ein in Umfangsrichtung wirksamer Formschluß zwischen Kontaktring 3 und zweiter Baugruppe 2 gewährleistet, so daß der Kontaktring 3 lediglich auf der Stützfläche 20 aufliegen kann.

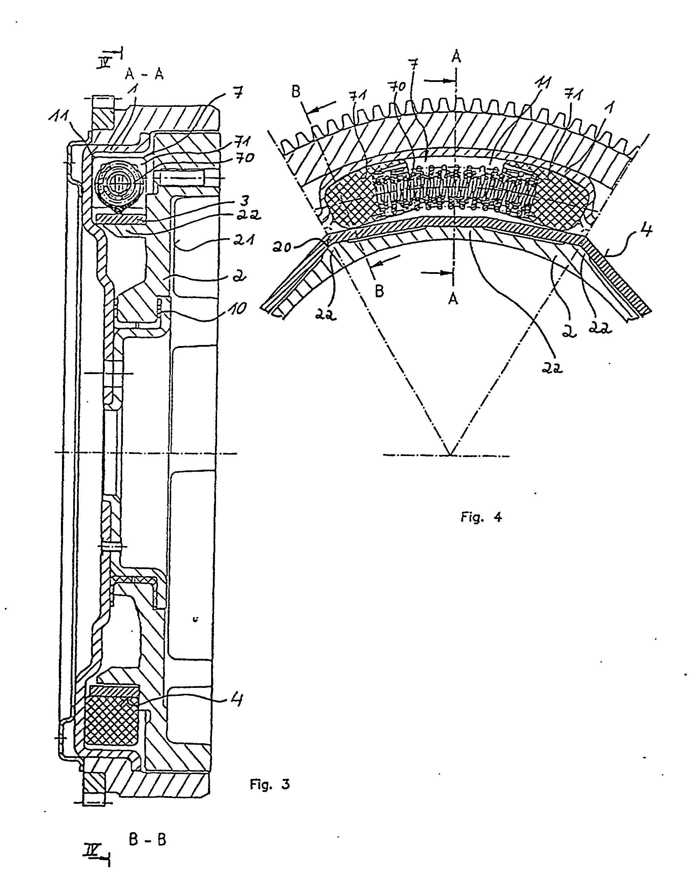

Bei der zweiten Ausführungsform (siehe Figuren 3 und 4) ist der Kontaktring 3 auf umfangsverteilt voneinander beabstandeten Vorsprüngen 22 abgestützt. Auf diese Weise ist ein in Umfangsrichtung partieller Kontakt zwischen separater Baugruppe, nämlich Kontaktring 3 und zweiter Baugruppe 2 gewährleistet. Die durch die Vorsprünge 22 gebildete, den Kontaktring 3 radial abstützende Stützfläche 20 ist ebenfalls der polygonalen Form des Kontaktrings 3 angepaßt, so daß die zweite Baugruppe 2 und der Kontaktring 3 durch einen in Umfangsrichtung wirksamen Formschluß miteinander verbunden sind.

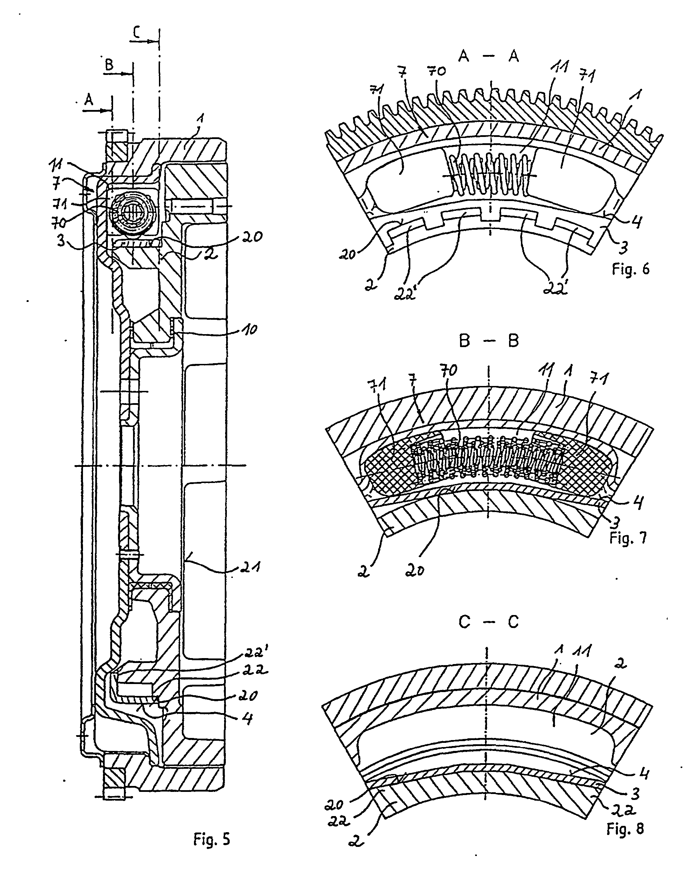

Der Kontaktring 3 der dritten Ausführungsform (siehe Figuren 5 bis 8) weist in axialer Richtung einen im wesentlichen L-förmigen Querschnitt auf. An seiner der zweiten Baugruppe 2 zugewandten Seite liegt der Kontaktring 3 auf Vorsprüngen 22 auf, die ähnlich dem Vorsprung 22 der ersten Ausführungsform in ihrer axialen Dicke variieren und der polygonalen Form des Kontaktrings 3 angepaßt sind. An seiner von der zweiten Baugruppe 2 abgewandten Seite greift der Kontaktring 3 mit seinem radialen Schenkel in voneinander beabstandete Vorsprünge 22' der zweiten Baugruppe 2 ein. Hierdurch wird eine Verzahnung gebildet, die, ergänzt durch den Formschluß zwischen Vorsprung 22 und Kontaktring 3, einen in Umfangsrichtung wirksamen Formschluß zwischen Kontaktring 3 und zweiter Baugruppe 2 bewirkt. Zwischen den Vorsprüngen 22 und 22' weist die zweite Baugruppe 2 eine zylindermantelförmige Oberfläche auf, deren Radius den kleinsten Innenradius des Kontaktrings 3 entspricht. Auf diese Weise liegt der Kontaktring 3 zwischen den Vorsprüngen 22 und 22' lediglich auf Höhe der Federn 70 an der zweiten Baugruppe 2 auf.

## Patentansprüche

1. Torsionsschwingungsdämpfer, insbesondere für Kupplungen mit zwei gegeneinander drehbeweglichen Baugruppen (1, 2), die über eine wenigstens einen Schubkolben (71) umfassende Federanordnung (7) miteinander wirkverbunden sind, wobei die Schubkolben (71) mit dazugehörigen Federn in Taschen einer ersten Baugruppe (1) der beiden Baugruppen (1, 2) angeordnet sind und zumindest die zweite Baugruppe (2) über eine Kontaktfläche mit einer radial gerichteten Oberflächenkomponente mit dem Schubkolben (71) der Federanordnung wechselwirkt, wobei die Kontaktfläche (4) auf einer separaten Baugruppe (3) ausgeformt ist, die zwischen zweiter Baugruppe (2) und Federanordnung (7) angeordnet ist, ***dadurch gekennzeichnet, dass*** die zweite Baugruppe (2) eine Stützfläche (20) aufweist, die die separate Baugruppe (3) radial abstützt.

2. Torsionsschwingungsdämpfer nach Anspruch 1, ***dadurch gekennzeichnet, dass*** die separate Baugruppe (3) nur partiell mit der zweiten Baugruppe (2) in Kontakt steht.

3. Torsionsschwingungsdämpfer nach Anspruch 2, ***dadurch gekennzeichnen, dass*** die separate Baugruppe (3) in axialer Richtung partiell mit der zweiten Baugruppe (2) in Kontakt steht.

4. Torsionsschwingungsdämpfer nach Anspruch 2 oder 3, ***dadurch gekennzeichnet, dass*** die separate Baugruppe (3) in Umfangsrichtung partiell mit der zweiten Baugruppe (2) in Kontakt steht.

5. Torsionsschwingungsdämpfer nach einem der Ansprüche 1 bis 4, ***dadurch gekennzeichnet, dass*** die separate Baugruppe (3) mindestens ein plattenförmiges Element umfasst, das auf einer entsprechenden Stützfläche der zweiten Baugruppe ruht.

6. Torsionsschwingungsdämpfer nach einem der Ansprüche 1 bis 5, ***dadurch gekennzeichnet, dass*** die separate Baugruppe (3) einen Kontaktring (3) umfasst.

7. Torsionsschwingungsdämpfer nach Anspruch 6, ***dadurch gekennzeichnet, dass*** die zweite Baugruppe (2) eine Stützfläche aufweist, die in axialer Richtung kleiner ist als der Kontaktring (3).

8. Torsionsschwingungsdämpfer nach Anspruch 6 oder 7, ***dadurch gekennzeichnet, dass*** die zweite Baugruppe (2) umfangsverteilt voneinander beabstandete Vorsprünge (22, 22') aufweist, auf welchen der Kontaktring (3) abgestützt ist.

9. Torsionsschwingungsdämpfer nach einem der Ansprüche 1 bis 8, ***dadurch gekennzeichnet, dass*** die separate Baugruppe (3) auf der zweiten Baugruppe (2) lediglich aufliegt.

10. Torsionsschwingungsdämpfer nach einem der Ansprüche 1 bis 9, ***dadurch gekennzeichnet, dass*** die separate Baugruppe (3) und die zweite Baugruppe (2) derart ausgeformt sind, dass sie durch einen in Umfangsrichtung wirksamen Formschluss miteinander verbunden sind.

11. Torsionsschwingungsdämpfer nach einem der Ansprüche 1 bis 10, ***dadurch gekennzeichnet, dass*** die separate Baugruppe (3) metallisch ist.

## Claims

1. A torsional vibration damper, more specifically for a clutch having two structural components (1, 2) that are rotatable relative to each other and are work-connected with each other by a spring arrangement (7) including at least one pusher piston (71), said pusher pistons (71) being disposed with their own springs in pockets of a first structural component (1) of the two structural components (1, 2) and at least the second structural component (2) interacting through a contact area having a radially oriented surface component with the pusher piston (71) of the spring arrangement, the contact area (4) being formed on a separate structural component (3) that is disposed between the second structural component (2) and the spring arrangement (7), ***characterized in that*** the second structural component (2) comprises a support area (20) that radially supports the separate structural component (3).

2. The torsional vibration damper according to claim 1, ***characterized in that*** the separate structural component (3) is only partially in contact with the second structural component (2).

3. The torsional vibration damper according to claim 2, ***characterized in that*** the separate structural component (3) is partially in contact with the second structural component (2) in an axial direction.

4. The torsional vibration damper according to claim 2 or 3, ***characterized in that*** the separate structural component (3) is partially in contact with the second structural component (2) in the circumferential direction.

5. The torsional vibration damper according to one of the claims 1 to 4, ***characterized in that*** the separate structural component (3) includes at least one plate-shaped element that rests on a corresponding support area of the second structural component.

6. The torsional vibration damper according to one of the claims 1 to 5, ***characterized in that*** the separate structural component (3) comprises a contact ring (3).

7. The torsional vibration damper according to claim 6, ***characterized in that*** the second structural component (2) comprises a support area that is smaller than the contact ring (3) in the axial direction.

8. The torsional vibration damper according to claim 6 or 7, ***characterized in that*** the second structural component (2) comprises circumferentially spaced protrusions (22, 22') supporting the contact ring (3).

9. The torsional vibration damper according to one of the claims 1 to 8, ***characterized in that*** the separate structural component (3) merely lies on the second structural component (2).

10. The torsional vibration damper according to one of the claims 1 to 9, ***characterized in that*** the separate structural component (3) and the second structural component (2) are formed in such a manner that they are interlocked so as to provide a form-positive fit that is operative in the circumferential direction.

11. The torsional vibration damper according to one of the claims 1 to 10, ***characterized in that*** the separate structural component (3) is metallic.

## Revendications

1. Amortisseur de vibrations de torsion, notamment pour des embrayages avec deux sous-ensembles (1, 2) montés mobiles en rotation l'un par rapport à l'autre et agissant conjointement par l'intermédiaire d'un montage de ressorts (7) comprenant au moins un poussoir (71), les poussoirs (71) étant disposés avec leurs ressorts dans des cavités d'un premier sous-ensemble (1) des deux sous-ensembles (1, 2) et le deuxième sous-ensemble (2) au moins interagissant, par l'intermédiaire d'une surface de contact ayant une composante de surface orientée radialement, avec le poussoir (71) du montage de ressorts, la surface de contact (4) étant formée sur un sous-ensemble distinct (3) qui est disposé entre le deuxième sous-ensemble (2) et le montage de ressorts (7), ***caractérisé en ce que*** le deuxième sous-ensemble (2) comporte une surface d'appui (20) qui soutient radialement le sous-ensemble distinct (3).

2. Amortisseur de vibrations de torsion selon la revendication 1, ***caractérisé en ce que* le** sous-ensemble distinct (3) n'est que partiellement en contact avec le deuxième sous-ensemble (2).

3. Amortisseur de vibrations de torsion selon la revendication 2, ***caractérisé en ce que*** le sous-ensemble distinct (3) est partiellement en contact avec le deuxième sous-ensemble (2) suivant la direction axiale.

4. Amortisseur de vibrations de torsion selon la revendication 2 ou 3, ***caractérisé en ce que*** le sous-ensemble distinct (3) est partiellement en contact avec le deuxième sous-ensemble (2) suivant la direction circonférentielle.

5. Amortisseur de vibrations de torsion selon l'une quelconque des revendications 1 à 4, ***caractérisé en ce que*** le sous-ensemble distinct (3) comprend au moins un élément en forme de plaque qui repose sur une surface d'appui correspondante du deuxième sous-ensemble.

6. Amortisseur de vibrations de torsion selon l'une quelconque des revendications 1 à 5, ***caractérisé en ce que*** le sous-ensemble distinct (3) comprend un anneau de contact (3).

7. Amortisseur de vibrations de torsion selon la revendication 6, ***caractérisé en ce que*** le deuxième sous-ensemble (2) comporte une surface d'appui qui est plus petite que l'anneau de contact (3) suivant la direction axiale.

8. Amortisseur de vibrations de torsion selon la revendication 6 ou 7, ***caractérisé en ce que*** le deuxième sous-ensemble (2) comporte, réparties sur sa circonférence, des saillies (22, 22') espacées les unes par rapport aux autres et sur lesquelles prend appui l'anneau de contact (3).

9. Amortisseur de vibrations de torsion selon l'une quelconque des revendications 1 à 8, ***caractérisé en ce que*** le sous-ensemble distinct (3) ne fait que reposer sur le deuxième sous-ensemble (2).

10. Amortisseur de vibrations de torsion selon l'une quelconque des revendications 1 à 9, ***caractérisé en ce que*** le sous-ensemble distinct (3) et le deuxième sous-ensemble (2) sont formés de telle manière qu'ils sont reliés entre eux par une liaison à coopération de formes agissant suivant la direction circonférentielle.

11. Amortisseur de vibrations de torsion selon l'une quelconque des revendications 1 à 10, ***caractérisé en ce que*** le sous-ensemble distinct (3) est métallique.
